# FASCICULE DE BREVET EUROPEEN

(11) **EP 0 456 651 B1**
(45) Date de publication et mention de la délivrance du brevet: **27.07.1994**
(21) Numéro de dépôt: 90901726.1
(22) Date de dépôt: 26.01.1990
(51) Int. Cl.: A01G 9/14, D03D 15/00

(54) **ECRAN D'OMBRAGE ET D'ISOLATION GARNI DE FILS TEXTILES HYDROPHILES**
SCHATTEN- UND ISOLATIONSSCHIRM MIT HYDROFILEN TEXTILFÄDEN
TINTING AND INSULATING SCREEN LINED WITH HYDROPHILIC TEXTILE THREADS

(30) Priorité: 31.01.1989 BE 8900096
(43) Date de publication de la demande: 21.11.1991
(73) Titulaire: BONAR PHORMIUM N.V., B-9140 Zele (BE)
(72) Inventeur: DEDECKER, Oscar, B-9000 Gent (BE)
(74) Mandataire: Vanderperre, Robert
(86) Numéro de dépôt international: BE9000004
(87) Numéro de publication internationale: WO9008459

(56) Documents cités:
- EP-A- 0 029 173
- EP-A- 0 089 422
- EP-A- 0 109 951
- FR-A- 2 035 299

## Description

La présente invention est relative à un écran d'ombrage et d'isolation selon le préambule de la revendication 1.

Elle s'applique surtout au jardinage et à l'horticulture sous écran ou toile d'ombrage pour protéger des fleurs et/ou des légumes cultivés en serres ou en plein air.

Un tel écran est connu par le document FR-A-2035299.

Il comprend des couches de bandelettes de chaîne et/ou de trame qui forment un damier à larges mailles ayant une résistance au déplacement excellente, malgré l'absence d'adhésif.

Dans cet écran connu, les fils et les bandelettes de chaîne forment des couples qui passent ensemble au-dessus et en dessous des couples de fils et bandelettes de trame et vice-versa.

Il en résulte les inconvénients suivants :
une déformabilité importante de l'écran en présence d'un effort latéral lors de l'enroulage et du déroulage de l'écran en raison de la structure de tissage lâche de l'écran; et
un pouvoir réfléchissant médiocre de la lumière par l'écran en raison du recouvrement d'une partie de la face interne des bandelettes réalisées en matière réfléchissante par des fils qui absorbent ou diffractent la lumière ou par des bandelettes en matière non refléchissante, par exemple au cas où des bandelettes métallisées et transparentes sont combinées.

Le procédé décrit pour réaliser le tissu susdit utilise une structure de tissage 2/2.

Un tissage de structure 2/2 ne peut empêcher le gl issement d'un fil sous une bandelette voisine. Or, un fil qui glisserait sous une bandelette voisine serait aplati et perdrait ses propriétés hydrophiles. Sa capacité à transporter l'humidité en serait anéantie.

Par EP-A-0089422, on connaît un tissage pour écran d'ombrage et d'isolation qui est formé de minces bandelettes de matière synthétique, qui sont entrelacées l'une dans l'autre et forment un damier suffisamment dense pour être imperméable à l'eau mais perméable à la vapeur et aux gaz.

Les bandelettes ont une épaisseur de 25 à 50 microns et une largeur d'environ 1,2 à 5,0 mm. Elles sont placées parfaitement à plat sans se chevaucher, de manière à présenter entre les bords de deux bandelettes juxtaposées des interstices libres infimes, qui sont réparties uniformément sur toute la surface de l'écran.

L'écran permet de régler ou de doser l'intensité lumineuse de l'écran en remplaçant l'une ou l'autre bandelette transparente par une bandelette métallisée.

L'écran est particulièrement solide et durable malgré l'utilisation d'un film polyester fragile et facilement déchirable ou d'un pur film métallisé.

Par EP-A-0109951, il est connu d'utiliser dans une serre chaude, comme moyen d'occultation en lieu et place d'un chaulage, un rideau de serre composé de plusieurs bandelettes flexibles qui s'étendent uniquement dans le sens de la longueur et qui sont reliées entre elles par des fils textiles transversaux et longitudinaux. Les fils longitudinaux se situent principalement le long du dos des bandelettes, près de l'espace compris entre deux bandelettes adjacentes.

Les fils de liaison transversaux sont situés au-dessus et en dessous du tissu et sont accouplés aux fils longitudinaux. La largeur des bandes correspond à celle de l'espace compris entre les fils de liaison longitudinaux avec seulement les fils de liaison transversaux entre eux. La face supérieure présente éventuellement des propriétés réfléchissantes ou filtrantes et peut, par exemple, réfléchir les rayons du soleil et/ou les filtrer. Les fils de liaison sont formés d'une matière, qui par capillarité peut absorber l'eau.

Le rideau est à double face. La face arrière possède des propriétés hydrophiles grâce à la présence de fils de liaison qui absorbent l'eau et la répartissent par capillarité entre les bandes adjacentes. La face supérieure possède des propriétés réflectrices et peut réfléchir les rayons du soleil. Toutefois, cet écran ne peut être déroulé ou retiré latéralement qu'avec difficulté parce qu'il se déforme très facilement en présence d'un effort latéral.

Les fils longitudinaux sont disposés serrés dans les fissures séparant deux bandelettes consécutives, tout contre les bords des bandelettes, sans se trouver dans le chemin, ce qui réduit le volume du rideau enroulé sur lui-même, mais le tissu possède une structure lâche, parce que les bandelettes longitudinales ne sont pas disposées vraiment l'une contre l'autre. Le tissu se déforme et a tendance à prendre une allure oblique lors du retrait et de l'enroulage de l'écran.

Par EP-A-0029173, il est connu de construire un rideau de serre comme tissu isolant, en plaçant une matière réfléchissant la chaleur entre les bandelettes textiles parallèles doubles. Le tissu doublement isolé possède un très bon pouvoir isolant et réfléchissant, mais parce que cette structure nécessite une double largeur d'étoffe, son prix est relativement élevé. Les bandes d'étoffe sont reliées entre elles par un montage approprié. C'est pourquoi elles exigent un espace relativement important lors de l'enroulage de la suspension ou du réglage latéral.

La présente invention vise à remédier à ces inconvénients. Elle concerne un écran du type décrit en tête de la revendication 1 et qui, outre les propriétés de réfléchir la chaleur et la lumière et d'être perméable aux gaz et à l'air, possède la propriété d'absorber l'humidité ainsi qu'une excellente stabilité.

Selon une particularité de l'invention, les fils transversaux et longitudinaux sont des fils textiles hydrophiles qui sont enlacés un à un séparément au-dessus et en dessous de chacun des fils et des bandelettes selon une structure nappe en haut, nappe en bas et servent de moyen de fixation du canevas, de manière à maintenir solidement les bandes susdites dans un canevas stable ou structure portante.

Dans une forme de réalisation particulière, les bandelettes de trame sont transparentes et passent toujours en dessous des bandelettes de chaîne.

Les fils de chaîne et les fils de trame sont des fils textiles hydrophiles.

Une caractéristique de la structure réside dans le fait qu'une perméabilité accrue à la lumière est obtenue lors de conditions de température extrêmes.

D'autres particularités et détails de l'invention apparaîtront au cours de la description des dessins ci-joints, qui illustrent schématiquement et non limitativement des formes de réalisation d'écrans d'ombrage à trame régulière, réalisés selon le procédé suivant l'invention.

Dans ces dessins :
- la figure 1 est une vue en plan, à plus grande échelle, d'une structure du tissage d'un écran comprenant deux fils textiles hydrophiles longitudinaux 5 serrés l'un contre l'autre, et
- la figure 2 est une vue en plan à plus grande échelle, d'une structure de tissage d'un écran comprenant des fils textiles hydrophiles longitudinaux 5 simples.

Dans ces dessins, les mêmes signes de référence désignent des éléments identiques ou analogues.

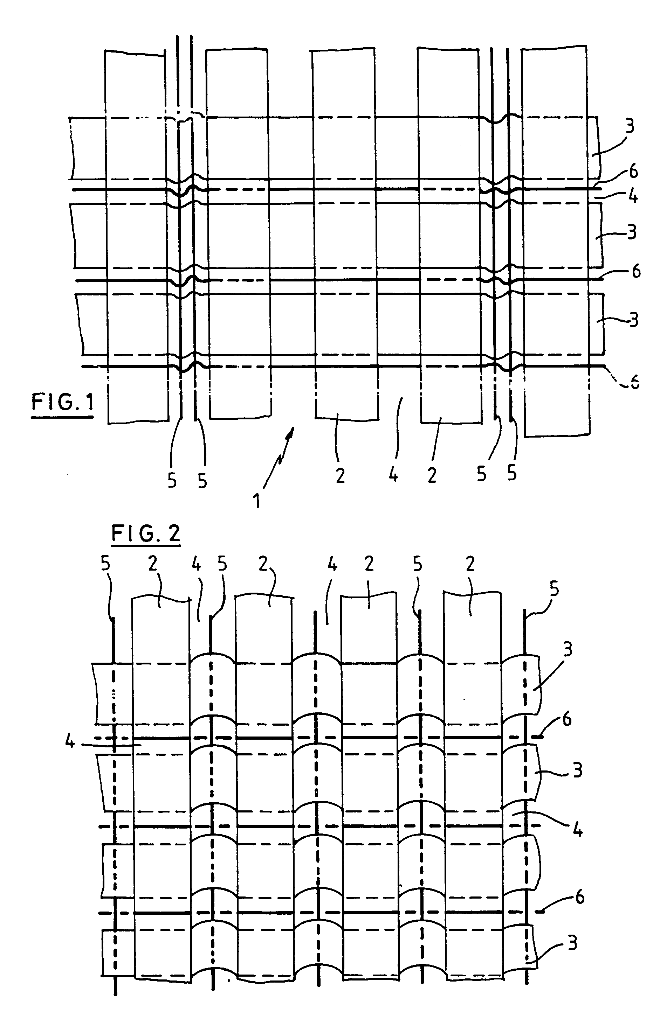

Comme illustré dans la figure 1, une forme de représentation possible de l'écran d'ombrage et d'isolation 1 selon l'invention, qui est désignée dans son ensemble par le signe 1, comporte un damier formé de bandelettes 2, 3 qui s'étendent tant en direction longitudinale que transversale et sont entrelacées comme éléments de trame et de chaîne, deux bandelettes adjacentes délimitant des interstices 4, qui sont uniformément répartis sur toute la surface de l'écran 1.

L'interstice 4 entre les bandelettes est dessiné à plus grande échelle pour rendre la structure du tissage claire. En réalité les bandelettes 2, 3 sont disposées l'une près de l'autre en se touchant par les bords.

Les bandelettes longitudinales 2 ainsi que les bandelettes transversales 3 sont reliées l'une à l'autre au moyen de fils textiles hydrophiles longitudinaux et transversaux 5, 6.

Lors de conditions climatiques extrêmes avec des fluctuations de température importantes, de la buée apparaît sur l'écran et des gouttelettes d'eau s'agrippent entre les entrecroisements du tissage. Ces gouttelettes d'eau provoquent une perte de lumière sous l'écran 1 par réflexion et absorption des rayons de soleil.

L'avantage réside dans le fait que les fils longitudinaux 5 comme les fils transversaux 6 passent alternativement au-dessus et en dessous de bandelettes adjacentes d'une même série. L'échange de plans des fils de liaison 5, 6 améliore l'absorption de gouttelettes prisonnières. L'eau qui est absorbée par la portion de fil qui se trouve sous une bandelette, est transférée par capillarité vers la portion de fil qui se trouve au-dessus de la bandelette.

De cette manière, l'eau formée par condensation est partiellement extraite de la serre.

Il est évident que la translucidité de l'écran 1 est ainsi rétablie par élimination des gouttelettes emprisonnées.

Mais outre la translucidité, le réchauffement de l'espace dans la serre est lui aussi influencé par l'existence de gouttelettes emprisonnées.

On constate que les gouttelettes emprisonnées s'évaporent d'abord. Ceci se réalise par absorption de chaleur à l'écran et à son voisinage. Ceci conduit automatiquement à un effet retardateur dans le cycle de réchauffement de la serre.

Un troisième avantage réside dans la conservation du volume faible de l'écran, malgré l'adjonction de fils de liaison 5, 6 en tant que structure de remplissage. En cas de non-utilisation, l'écran est enroulé ou replié. Un volume ramassé entraîne naturellement moins d'ombre et donc un gain de croissance.

Les bandelettes de chaîne 2 sont de préférence transparentes ou réfléchissantes, les bandelettes de trame 3 transparentes ou réfléchissantes et les fils de chaîne 5 et de trame 6 des fils de polyester.

Dans la figure 2, on montre une seconde forme possible de l'écran d'ombrage et d'isolation 1 selon l'invention. Le nombre de fils hydrophiles 5 que la structure de tissage comprend pour chaque bandelette de chaîne 2, est réduit à un seul. Le nombre de fils absorbants placés à côté de chaque bandelette de chaîne ou de trame et/ou le nombre de bandelettes comprises entre deux fils de chaîne ou de trame ne forment aucune particularité qui tendrait à réduire la portée de l'invention.

En remplissant la structure de base avec des fils de liaison, on réalise un tissage stable, qui entraîne une structure double dense qui procure une manutention plus aisée de la toile à sa mise en oeuvre.

## Revendications

1. Ecran d'ombrage et d'isolation (1) constitué de bandelettes longitudinales (2) et transversales (3) disposées à plat et entrecroisées pour former un damier dont les bandes longitudinales (2) sont les éléments de chaîne tandis que les bandes transversales (3) sont des éléments de trame et de fils transversaux (6), ainsi que longitudinaux (5) qui relient entre elles les bandelettes (2,3) susdites et créent entre les bords adjacents de bandelettes consécutives des interstices libres (4) qui procurent à l'écran une perméabilité homogène sur l'entièreté de sa surface, caractérisé en ce que les fils transversaux (6) et longitudinaux (5) sont des fils textiles hydrophiles qui sont enlacés un à un séparément au-dessus et en dessous de chacun des fils et des bandelettes (2, 3) selon une structure nappe en haut, nappe en bas et servent de moyens de fixation du canevas,de manière à maintenir solidement les bandes susdites dans un canevas stable ou structure portante.

2. Ecran d'ombrage et d'isolation selon la revendication 1, caractérisé en ce que les bandelettes de trame (3) sont transparentes et passent toujours en-dessous des bandelettes de chaîne (2).

3. Ecran d'ombrage et d'isolation selon l'une quelconque des revendications précédentes, caractérisé en ce que les fils de chaîne (5) et les fils de trame (6) sont des fils textiles hydrophiles.

## Claims

1. Shading and insulating screen (1) consisting of longitudinal and transverse strips (2, 3 respectively) laid flat and interwoven to form a criss-cross arrangement in which the longitudinal strips (2) are the warp elements whilst the transverse strips (3) are the weft elements, and transverse threads (6) and longitudinal threads (5) which join together the abovementioned strips (2, 3) and create free spaces (4) between the adjacent edges of consecutive strips, these spaces (4) imparting a homogeneous permeability to the entire surface of the screen, characterised in that the transverse and longitudinal threads (6, 5 respectively) are hydrophilic textiles which are interwoven separately, one by one, above and below each thread and each strip (2, 3) in a nap above, nap below configuration and act as fixing means for the canvas, so as to hold the abovementioned strips firmly in place in a stable canvas or load-bearing structure.

2. Shading and insulating screen according to claim 1, characterised in that the weft strips (3) are transparent and always pass below the warp strips (2).

3. Shading and insulating screen according to either of the preceding claims, characterised in that the warp threads (5) and weft threads (6) are hydrophilic textile threads.

## Patentansprüche

1. Schatten- und Isolationsschirm (1), der longitudinale (2) und transversale (3) Bändchen aufweist, die eben und miteinander gekreuzt angeordnet sind, um ein Schachbrettmuster zu bilden, dessen longitudinale Bändchen (2) die Kettenelemente bilden, während die transversalen Bändchen (3) die Schußelemente bilden, und der transversale (6) sowie longitudinale (5) Fäden aufweist, die zwischen sich die besagten Bändchen (2, 3) verbinden und zwischen den angrenzenden Rändern aufeinanderfolgender Bändchen freie Zwischenräume (4) bilden, die dem Schirm eine gleichmäßige Permeabilität auf seiner gesamten Oberfläche verleihen, dadurch gekennzeichnet, daß die transversalen (6) und longitudinalen (5) Fäden hydrophile Textilfäden sind, die eines mit dem anderen getrennt oberhalb und unterhalb eines jeden Fadens und Bändchens (2, 3) entsprechend einer Fadenschicht, die sich oberhalb und unterhalb des Gewebes befindet, verflochten sind, und die als Befestigungsmittel des Gitters in der Weise dienen, daß die besagten Bänder in dem stabilen Gitter oder der tragenden Struktur gehalten werden.

2. Schatten- und Isolationsschirm nach Anspruch 1, dadurch gekennzeichnet, daß die Schußbändchen (3) transparent sind und immer unter den Kettenbändchen (2) verlaufen.

3. Schatten- und Isolationsschirm nach einem der obigen Ansprüche, dadurch gekennzeichnet, daß die Kettenfäden (5) und die Schußfäden (6) hydrophile Textilfäden sind.
